# EUROPEAN PATENT APPLICATION

(11) **EP 4 620 891 A1**
(43) Date of publication of application: **24.09.2025**
(21) Application number: 25162632.1
(22) Date of filing: 10.03.2025
(51) Int. Cl.: B66C 23/80, B66F 9/075, B66F 9/065

(54) **STABILISING SYSTEM FOR SELF-PROPELLED OPERATING MACHINES**

(30) Priority: 19.03.2024 IT 202400006097
(71) Applicant: Manitou Italia S.r.l., 41013 Castelfranco Emilia (Modena) (IT)
(72) Inventor: IOTTI, Marco, 42123 REGGIO EMILIA (IT)
(74) Representative: Casadei, Giovanni

(57) **Abstract**

Described is a stabilising system for a self-propelled operating machine (1), such as a telescopic handler or the like, comprising at least two scissor stabilisers (10), designed to adopt an active configuration, in which they stabilise the machine (1) raising the wheels (11) of the machine (1) from the ground, and an inactive configuration, in which said wheels (11) are rested on the ground, wherein:
each stabiliser (10) comprises at least one pair of rotatable telescopic stabilising arms (2a, 2b);
each arm (2a, 2b) comprises a first segment (21a, 21b), rotatable between a raised position and an operating position, and a second segment (22a, 22b), slidable relative to the first segment (21a, 21b) between an extended position and a closed position and provided with a foot (20) for contact with the ground;
first movement means (3) are designed for rotating the first segments (21a, 21b) between said raised position and said operating position;
second movement means are designed for moving the second segments (22a, 22b) between said closed position and said extended position;
characterised in that it comprises a processing unit configured to control said first and second movement means in the following steps:
rotating the first segments (21a, 21b) from the operating position to an intermediate position; sliding of the second segment (22a) of a first arm (2a) to the closed position; rotating the first segment (21b) of a second arm (2b) from said intermediate position to the raised position; sliding of the second segment (22b) of the second arm (2b) to the closed position; rotating the first segment (21a) of the first arm (2a) from the intermediate position to the final position.

## Description

This invention relates to a system for stabilising self-propelled operating machines, in particular rotary telescopic handlers or "telehandlers".

There are prior art telescopic handlers, consisting of a vehicle equipped with a movable frame on wheels, which comprises a platform mounted on the frame, which in turn mounts the driver's cab and an operating arm which can be extended telescopically.

At the distal end of the arm there is an apparatus for lifting or moving loads, such as, for example, a fork, a cage, a lateral transfer unit, a hoist, etc.

In order to lift and move loads at great heights and with a significant "range" it is necessary to stabilise the vehicle, raising the wheels above the ground. There are prior art stabilisers for telescopic handlers of the so-called "scissor lift" type, consisting of two stabilising units, provided at the front and at the rear of the vehicle and mounted on its frame close to the wheels. Each stabilising unit comprises a pair of arms rotatable and extendable telescopically, usually with a single or twin sliding member, which have respective distal ends, intended to be rested on the ground by means of supporting feet, and proximal ends, hinged to a supporting frame.

In practice, the stabilising arms are positioned crossed relative to each other and, during the lifting, move like a pair of scissors.

Once the operations for moving the loads have been completed, the stabilisers are moved to the non-operating configuration in which they have the minimum overall dimensions, thus lowering the machine until resting the wheels on the ground.

The return of the known stabilisers to the non-operating configuration is carried out through predetermined sequences of movements.

A first example of the sequence comprises the arms rotating upwards, until the wheels rest on the ground. During this step, the sliding members protrude from the relative first segment or "sleeve" and are therefore still extracted. At this point, the arms are rotated upwards in such a way as to be horizontal, parallel to each other; the sliding members are retracted completely only after the arms have reached the horizontal position, concluding the operations for recovery and enabling the operator to start the vehicle drive.

According to a second example of a sequence, which is more effective and rapid than the first, the arms perform a first rotation to detach the feet from the ground. The sliding members are then retracted entirely. The final step of the sequence is the complete rotation of the arms.

The prior art sequences involve symmetrical and simultaneous movements for the two arms of each stabiliser. In other words, the two arms of each stabiliser perform simultaneous movements symmetrical relative to each other.

In many cases, the simultaneous return of both arms of a stabiliser can generate a condition of potential danger, especially if the vehicle operates in a non-planar zone, and conditions of imperfect stability of the vehicle. There are also cases in which there are obstacles or dimensions present in the environment in which the stabilisers operate which can prevent the simultaneous return of the arms.

In this context, the technical purpose which forms the basis of this invention is to propose a system for stabilising self-propelled operating machines and a method for controlling stabilising, which overcome the technic al problems summarised above.

Further features and advantages of the invention are more apparent in the detailed description below, with reference to a preferred, non-limiting, embodiment of a system as illustrated in the accompanying drawings, in which:
- Figure 1 is an axonometric view of a telehandler which includes the stabilising system according to the invention;
- Figures 2 - 8 are front views of the machine of Figure 1 which show different steps of the sequence for return of the stabilisers included in the proposed system.

With reference to the accompanying drawings, the numeral 1 denotes in its entirety a vehicle comprising the system according to the invention.

The system according to the invention is structured preferably, but not exclusively, to be implemented on a vehicle 1 consisting of a self-propelled operating machine such as a telehandler or an aerial platform, etc... and may be of the rotary type or even of the fixed type, as shown in the drawings. The system according to the invention includes stabilisers 10 intended to be mounted on the vehicle 1. According to the embodiment illustrated, each stabiliser 10 comprises at least one pair of telescopic stabilising arms 2. In the following description, the telescopic stabilising arms will be referred to simply as arms.

Each arm 2 is provided with a longitudinal axis C.

Preferably, the stabilisers 10 provided in the system according to the invention are of the so-called "scissor" or "X" type, and each include a pair of arms 2, for example with a single sliding member. The two pairs of arms are located, respectively, in a front zone and in a rear zone of the vehicle 1, close to the wheels 11.

It should be noted that when in this description the adjective "horizontal" is used or reference is made to "horizontal" planes, it is used to refer to the horizontality in the case of flat and horizontal ground.

In fact, it is clear that if the ground on which the wheels 11 or stabilisers 10 rest is not regular or is inclined, the "horizontal" reference is inclined accordingly.

According to the preferred but non-limiting embodiment illustrated, each stabiliser 10 includes a supporting structure 100, fixed to or incorporated in the frame of the machine 1, to which the arms 2 of a pair are individually hinged, in a cross-like configuration, so as to be able to move in a counterrotating fashion, like a pair of scissors.

Still more in detail, the two arms 2 connected to the same supporting structure 100 are mounted one in front of the other, so as to move in parallel planes, generically vertical.

The stabilisers 10 of the proposed system are designed to adopt an active configuration, wherein they stabilise the machine 1, raising the wheels above the ground, and an inactive configuration, wherein the wheels 11 are rested on the ground.

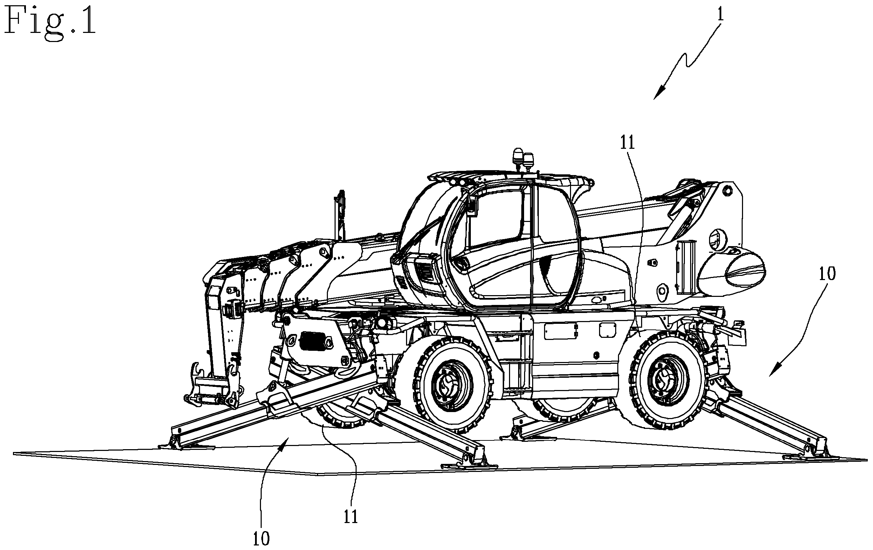

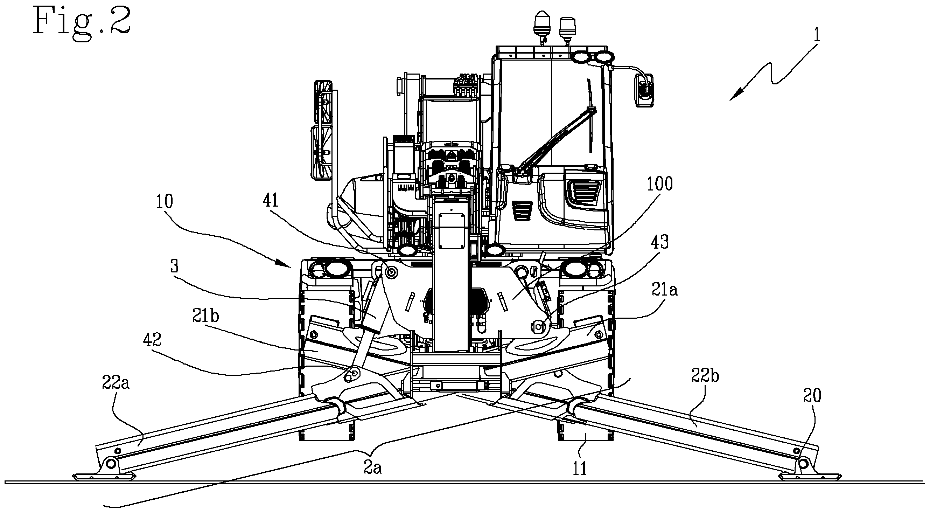

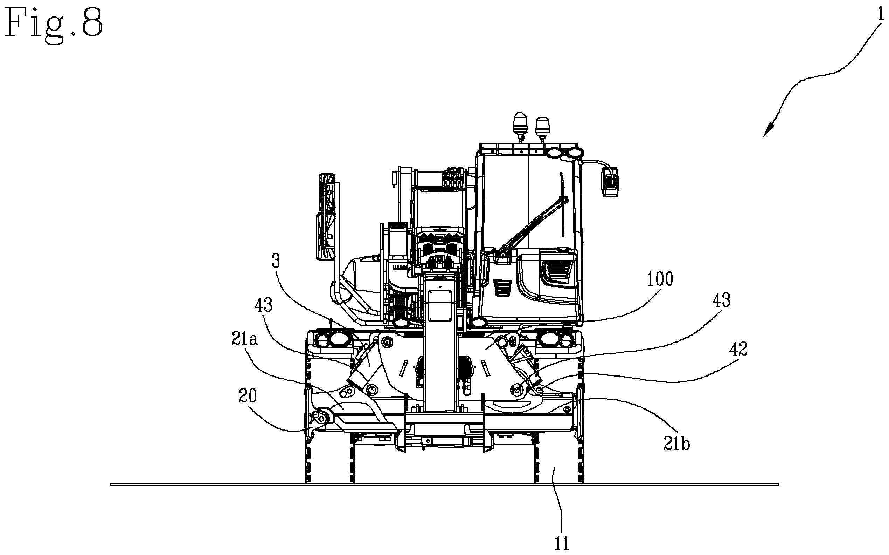

In the inactive configuration of the stabilisers, the arms 2 are in a raised position, wherein they are distanced from the ground (see Figure 8), and in particular freely allow the driving of the vehicle 1. In the active configuration (Figures 1 and 2), the arms 2 rest on the ground to stabilise the vehicle. In the description which follows, the active or inactive configuration is associated both with the stabilisers 10 and with the arms 2 of the stabilisers 10.

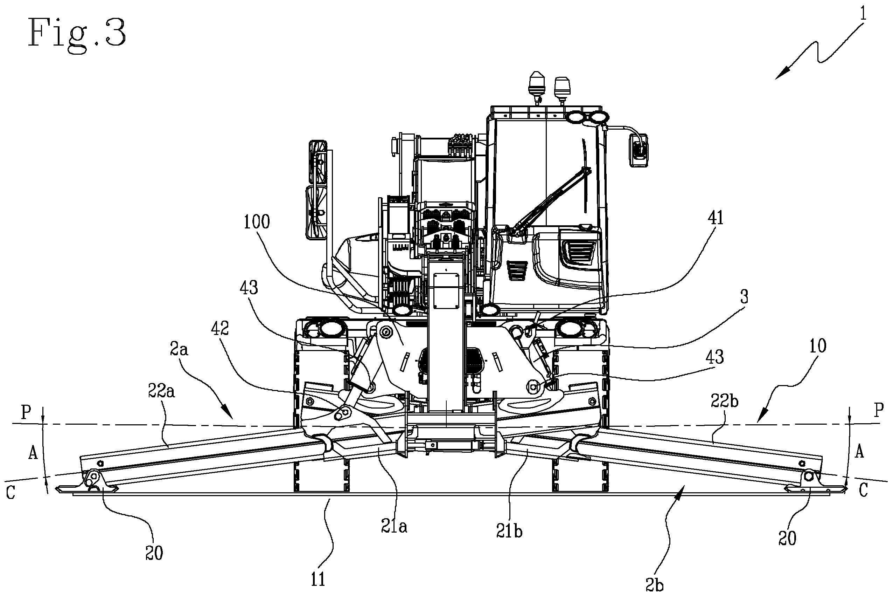

In the active configuration of the stabilisers, shown in Figure 3, the arms 2 rest on the ground and detach the wheels from the ground, in such a way as to free the wheels from the load due to the weight of the vehicle. In short, the active configuration of the stabilisers is a configuration wherein the load of the vehicle, that is to say, the load due to the weight of the vehicle, is supported only by the arms 2, as shown in Figure 3.

It is, however, possible that, when the arms 2 rest on the ground, the arms 2 do not stop the relative movement, but continue to move to lift further the wheels, as shown in Figure 2. This may be necessary to level the vehicle in the presence of sloping or uneven ground, that is to say, non-horizontal ground.

In general, the active configuration of the stabilisers 10, that is to say, the position adopted by the arms 2 in the active configuration of the stabilisers, depends on the specific conditions in which the vehicle 1 is to operate, with particular reference to the type of ground on which the machine 1 must stabilise.

In effect, depending on the slope or the shape of the ground on which the vehicle 1 stabilises, the arms 2 may rest on the ground with variable inclinations and lengths.

According to the preferred but non-exclusive embodiment illustrated, each arm 2 comprises a first segment 21a, b and a second segment 22a, b.

The first segment 21a,b is rotatable between a raised position and an operating position. The rotation of the first segment 21a, b determines the rotation of the corresponding arm 2 in its entirety, including the second segment 22a,b. In the description which follows, when speaking of rotation of an arm 2 reference is made to the rotation of the respective first segment 21a, 21b, and vice versa.

It should be noted that, when this description refers to the angle of inclination of an arm 2 in a predetermined position, or the inclination of an arm 2 in a predetermined position, reference is made to the angle A between the longitudinal axis C of the arm 2, when the respective first segment 21a, 21b is in the raised position, and the longitudinal axis C in that predetermined position. In other words, the angles of inclination or the inclinations which will be mentioned are measured relative to the reference defined by the angular position of the longitudinal axis C when the first segment 21a, 21b of the arm 2 is in the raised position. The position of the longitudinal axis C of an arm 2 in the raised position of the respective first segment 21a, 21b is indicated with the line P in the accompanying drawings. In performing the rotation from the operating position to the raised position, or vice versa, each first segment 21a, 21b and the relative arm 2 sweep a total angle of rotation which depends on the constructional characteristics of the stabilising device and the stabilising conditions.

The second segment 22a,b is slidable relative to the first segment 21a,b between an extended position and a closed position. The second segment 22a, b is also provided with a foot 20 for contact with the ground. The foot 20 is associated with a free end of the second segment 22a,b.

The closed position is the position of minimum extension, or maximum retraction, of the second segment 22a, 22b. Preferably, in this position, only the foot 20 protrudes from the first segment 21a, 21b. In any case, it is possible that, in addition to the foot 20, also an end portion of the second segment 22a, 22b may protrude from the first segment 21a, 21b.

When the first segments 21a, 21b are in the operating position and the second segments 22a, 22b are in the extended position, the stabilisers are in the active configuration. When the first segments 21a, 21b are in the raised position and the second segments 22a, 22b are in the closed position, the stabilisers are in the inactive configuration.

Preferably, but not necessarily, the first segment 21a,b is hollow. The second segment 22a,b is slidably inserted in the first segment 21a,b. In particular, the second segment 22a,b is slidable relative to the first segment 21a,b between said extended position, where it protrudes from the first segment 21a,b for a longer stretch, and said closed position, where it protrudes from the first segment 21a,b for a shorter stretch. Preferably, in the closed position of the first segment 22a,b, only the foot 20 protrudes from the first segment 21a,b.

According to the preferred but non-exclusive embodiment illustrated, each segment 21a,b, 22a,b comprises a rectilinear beam. The beam of the second segment 22a,b is inserted with the possibility of sliding in the hollow beam of the first segment 21a,b.

The invention comprises first movement means 3, designed for individually rotating the first segments 21a,b between the raised position and the operating position. As already mentioned, the rotation of the segments 21a,b determines the rotation of the respective arm 2 of which they are part. Preferably, the first movement means comprise a hydraulic cylinder 3 for each arm 2.

More in detail, the first segment 2a,b of each arm 100 is connected to the supporting structure 43 by a first hinge 2; moreover, at the end of the movement of the arm 2 about the first hinge 3, use is made of the hydraulic cylinder 3, the thrust of which is used for lifting during the stabilising step. Each hydraulic cylinder 3 is connected by a second hinge 41 to the supporting structure 100 and, through a third hinge 42, to the first segment 21a,b of the respective arm 2.

The first and the third hinge 42, 43 are positioned in two distinct points of the length of the first segment 21a,b, preferably at the upper side, the first being further inside, that is closer to the proximal end of the first segment 21a,b, and the third further outside, that is, closer to the distal end.

In practice, the hydraulic cylinders 3 are actuated with a pushing action to move the stabilisers 10 to the active configuration, that is to say, to move the arms 2 to the ground and lift the vehicle 1, whilst they are actuated with a retraction action when the vehicle 1 is returned to rest on the wheels and the stabilisers 10 are raised in the inactive position.

In particular, the hydraulic cylinders 3 are actuated with a pushing action to rotate the first segments 21a,b towards the operating position, whilst they are actuated with a retraction action to rotate the first segments 21a,b towards the raised position.

The invention includes second movement means, for example comprising hydraulic cylinders (not shown), designed for moving individually the second segments 22a,b between the extended position and the closed position.

In practice, for the purposes of extending the second segment 22a,b outside the first segment 21a,b, use is made of a hydraulic cylinder, inserted between the second segment 22a,b and the first segment 21a,b and connected to each other at opposite ends.

The system according to the invention includes a processing unit, designed for adjusting the movements of the stabilisers 10, as described in more detail below.

Generally speaking, it should be noted that, in this description, the processing unit is presented as divided into separate functional modules for the purpose of describing the functions clearly and completely.

In practice, the processing unit may consist of a single electronic device, also of the type commonly present on this type of machine, suitably programmed to perform the functions described; the various modules can correspond to hardware units and/or software forming part of the programmed device.

Alternatively or in addition, the functions can be performed by a plurality of electronic devices on which the above-mentioned functional modules can be distributed.

Generally speaking, the processing unit may have one or more microprocessors for execution of the instructions contained in the memory modules and the above-mentioned functional modules may also be distributed on a plurality of local or remote calculators based on the architecture of the network on which they are housed.

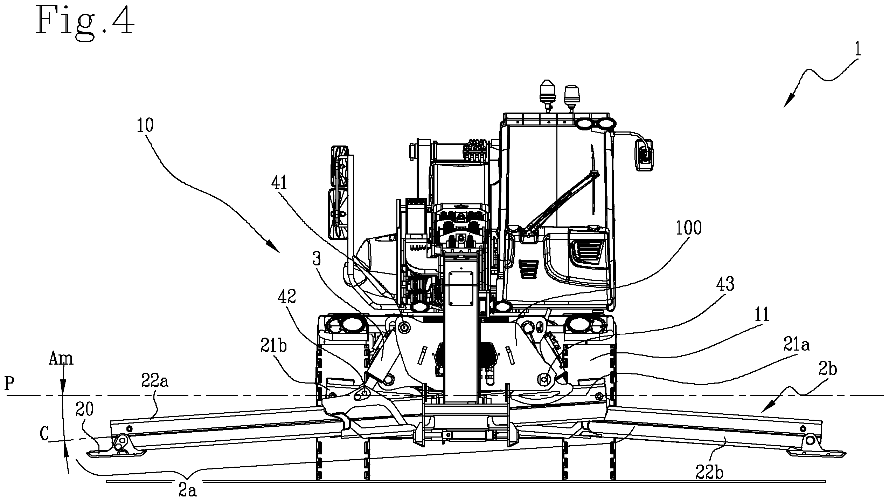

Advantageously, the processing unit is configured for controlling said first and second movement means in such a way that each stabiliser 10 is brought from the active configuration to the inactive configuration by means of a sequence of movements which comprise the following operating steps:
- rotating the first segments 21a, 21b from the operating position to an intermediate position Am; the intermediate position is substantially a position in which the feet 20 are detached from the ground, as shown in Figure 4;
- sliding the second segment 22a of a first arm 2a to the closed position;
- rotating the first segment 21b of a second arm 2b from said intermediate position to the raised position;
- sliding the second segment 22b of the second arm 2b to the closed position;
- rotating the first segment 21a of the first arm 2a from the intermediate position to the final position.

The solution according to this invention therefore comprises a separate and non-symmetrical actuation of the first and the second arm 2a, 2b of each stabiliser. In the case of positioning the vehicle on an inclined or irregular ground, or in the presence of obstacles located in critical positions for one side or the other of the vehicle, this invention allows the arms positioned on one side of the vehicle to be activated first. In other words, the first arm 2a of the sequence described above may be any of the two arms of the stabiliser 10.

The solution according to this invention also allows the prevention of impacts and/or interference between the components of the two arms 2a, 2b of each stabiliser.

According to a first possible embodiment of the invention, the sliding of the second segment 22a of a first arm 2a up to the closed position and the rotation of the first segment 21b of a second arm 2b from said intermediate position to the raised position occur simultaneously.

According to a second possible embodiment of the invention, the sliding of the second segment 22b of the second arm 2b to the closed position and the rotation of the first segment 21a of the first arm 2a from the intermediate position to the final position occur simultaneously.

According to a third possible embodiment of the invention, the rotation of the first segment 21b of a second arm 2b from said intermediate position to the raised position and the sliding of the second segment 22b of the second arm 2b to the closed position occur simultaneously. Preferably, but not necessarily, according to this third possible embodiment of the invention, at least a part of the movement of the second segments 22a, 22b from the extended position to the closed position occurs simultaneously. Preferably, the second segment 22b of the second arm 2b stops at an intermediate point of its stroke, until the moment the second segment 22a of the first arm 2a reaches its closed position. This makes it possible to make more precise the actuation of the motor means designed for the movements of the various segments (21a, 21b, 22a, 22b).

Each of the three embodiments described above, by simultaneously performing at least two steps of the method, allows the time for execution of the sequence to be reduced, and therefore the time necessary for each stabiliser 10 to pass from the active configuration to the inactive configuration is reduced.

In short, the passage of each stabiliser 10 from the active configuration to the inactive configuration comprises the following steps.

Initially, the processing unit controls the rotation of the first segments 21a, 21b from the operating position, illustrated in Figure 3, to an intermediate position Am. This intermediate position is a position in which the wheels 11 of the vehicle 1 are positioned in contact with the ground and the feet 20 detach from the ground, as shown in Figure 4, for a height sufficient to guarantee that the feet 20 do not slide on the ground.

Preferably, in the intermediate position, the angle of inclination Am of the arm 2 is greater than or equal to 50% of the total angle of rotation of the arm 2 between the raised position and the operating position of the respective first segment 21a, 21b. In other words, the angle of rotation made by the first segments 21a, 21b from the operating position to the intermediate position Am is less than or equal to 50% of the total angle of rotation from the operating position to the raised position.

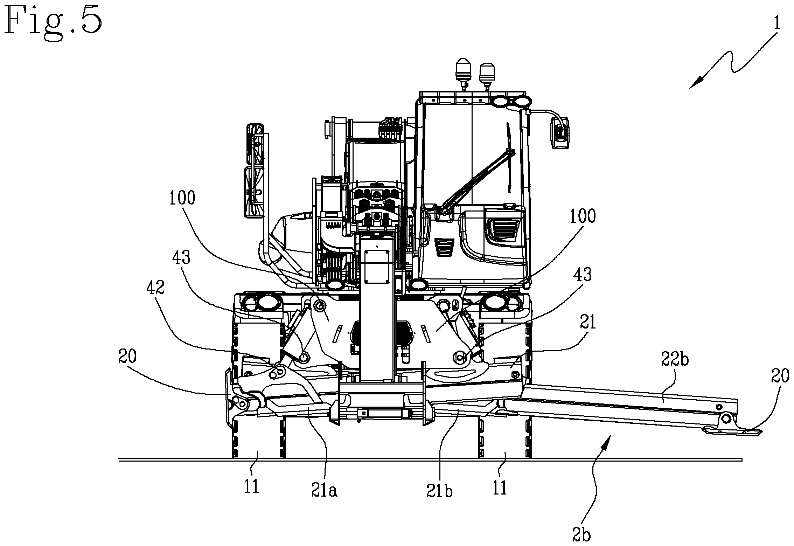

In a second step, the processing unit controls the sliding of the second segment 22a of a first arm 2a to the closed position (Figure 5).

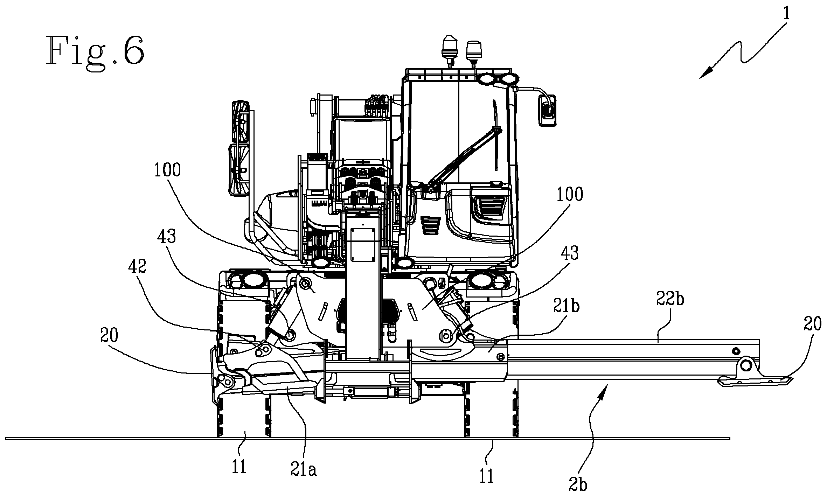

In a third step, the processing unit controls the rotation of the first segment 21b of a second arm 2b from said intermediate position to the raised position (Figure 6).

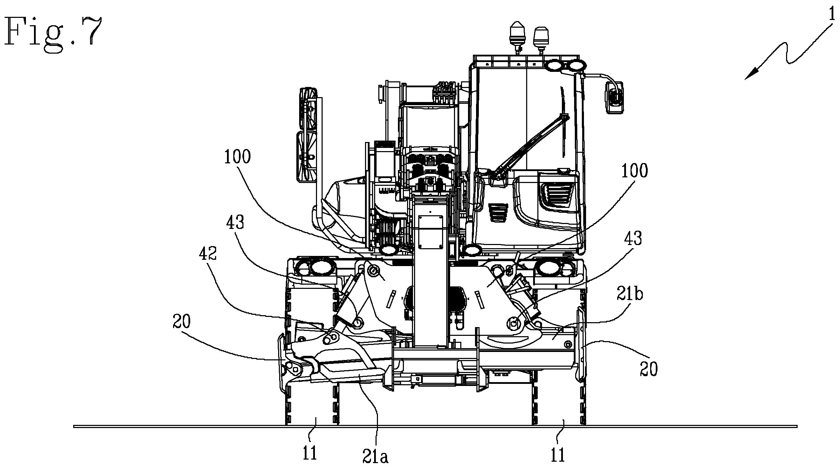

In a fourth step, the processing unit controls the sliding of the second segment 22b of the second arm 2b to the closed position (Figure 7).

In a fifth step, the processing unit controls the rotation of the first segment 21a of the first arm 2a from the intermediate position to the final position (Figure 8).

At the end of the fifth step, the stabilisers are in the inactive configuration.

It should be noted that the first arm can be either one of the two arms of a stabiliser 10, that is to say, the arm to be activated first, in the context of the steps according to the invention, can be any of the two arms of a stabiliser 10.

Moreover, the steps according to the invention can be performed independently for the front stabiliser and the rear stabiliser of a vehicle, and for each stabiliser it is possible to select which arm to activate first. According to the above-mentioned first possible embodiment of the invention, the second and third steps occur simultaneously, that is to say, the sliding of the second segment 22a of a first arm 2a to the closed position and the rotation of the first segment 21b of a second arm 2b from the intermediate position to the raised position occur simultaneously. According to the above-mentioned second possible embodiment of the invention, the fourth and the fifth steps occur simultaneously, that is to say, the sliding of the second segment 22b of the second arm 2b to the closed position and the rotation of the first segment 21a of the first arm 2a from the intermediate position to the final position occur simultaneously.

According to the above-mentioned third possible embodiment of the invention, the third and the fourth steps occur simultaneously, that is, the rotation of the first segment 21b of a second arm 2b from said intermediate position to the raised position and the sliding of the second segment 22b of the second arm 2b to the closed position occur simultaneously.

According to a possible embodiment of the invention, the first of the steps described, that is, the rotation of the first segments 21a, 21b from the operating position to an intermediate position Am, is a direct rotation in one direction only. In other words, each arm rotates directly from the operating position to the intermediate position. As already mentioned, the intermediate position is substantially a position in which the feet 20 are detached from the ground by a certain height, as shown in Figure 4.

According to a further possible embodiment of the invention, the first of the steps described, that is to say, the rotation of the first segments 21a, 21b from the operating position to an intermediate position Am, comprises a first rotation, which moves the first segments 21a, 21b beyond the intermediate position Am, that is to say, it moves the first segments to a reference position between the rest position and the intermediate position Am. Subsequently, a step is performed in which the first segments 21a, 21b rotate in the opposite direction from the reference position to the intermediate position (Am). According to this further embodiment of the invention, it can be guaranteed that the arms 2 of a stabiliser are positioned in intermediate positions Am symmetrical to each other with respect to a plane perpendicular to the reference plane P, even if the vehicle is on an inclined plane.

Preferably, in the inactive configuration of the stabilisers 10, the arms 2 are inclined upwards, that is, relative to a horizontal plane, the ends which support the feet 20 are at a height higher than the ends pivoted to the supporting structure 100. Preferably, the inclination of the arms, in this configuration, is between 1° and 3°.

According to another possible embodiment, in the inactive configuration of the stabilisers 10, the arms 2 are substantially horizontal and parallel to each other. In the active configuration, and in at least a part of the intermediate configurations between the active and the inactive configuration, the arms 2 are crossed.

Preferably, the arms 2 of a stabiliser 10 move in a synchronous fashion with the arms 2 of the other stabiliser. In any case, a solution is possible wherein the arms 2 of a stabiliser move in a non-synchronous fashion with the arms 2 of the other stabiliser. Moreover, as already mentioned, the first arm may be either of the two arms of a stabiliser 10, that is to say, the arm to be activated firstly, in the context of the steps according to the invention, may be either of the two arms of a stabiliser 10. Moreover, the steps according to the invention can be performed independently for the front stabiliser and the rear stabiliser of a vehicle, and for each stabiliser it is possible to select which arm to activate first.

The processing unit is connected to the commands located in the cabin of the machine, in such a way that the operator can operate the stabilisers 10 by means of a joystick or other commands.

In practice, acting continuously on a command, for example a joystick, a lever or the like or a switch, the arms 2 perform the movements described above to determine the passage from the active configuration to the inactive configuration of the stabilisers 10. The operator can interrupt the movements by simply releasing the command, for safety reasons.

The system according to this invention comprises an electro-hydraulic distributor which controls the above-mentioned cylinders which move in rotation and elongation (or retraction) the arms 2, that is to say, the first segments 21a, 21b and the second segments 22a, 22b of the arms 2a, 2b. The distributor is connected to the cylinders and adjusts the operation on the basis of control signals arriving from the processing unit.

The control signals are produced by the processing unit for activating the cylinders in the stabilising arms 2, in such a way as to perform the movements described above.

The invention may include first detection means, connected to the processing unit and configured for measuring the inclination of the arms 2a, 2b with respect to a reference P. As already specified, the reference P may be defined by the longitudinal axis C of the arm 2a, 2b, when the respective first segment 21a, 21b is in the raised position. Alternatively, the reference P is a horizontal plane. Alternatively, the reference P may be defined by the plane on which the lower wall of the supporting structure 100 lies, or a plane parallel to it.

The first detection means may comprise, for example, encoders and/or potentiometric angular position detectors, microswitches or proximity sensors. Generally speaking, the first detection means are configured to measure the angular position of the arms 2a, 2b. In other words, the first detection means are designed for producing an inclination signal as a function of the measurements taken, transmitted to the processing unit which controls the hydraulic distributor in accordance with the inclination signals received.

In any case, the first detection means allow the inclination of the arm 2 to be determined, that is, the angle formed by the first segment 21a, 21b and the reference P.

Moreover, the invention may include second detection means (not illustrated), connected to the processing unit and configured to measure the length of the projecting part of second segment 22a, 22b with respect to the respective first segment 21.

The second detection means are configured to measure and quantify the position of extraction of the second segments 22a, 22b relative to the respective first segments 21a, 21b.

For example, the second detection means comprise a wired position sensor, provided with a winder, integral with the first segment 21a, 21b, the wire of which is connected to the second segment 22a, 22b, or vice versa. The winder is connected to an encoder or to an angular position transducer. Alternatively, position sensors may be used which measure the distance of a fixed reference to the second segment 22a, 22b relative to the first segment 21a, 21b and so on. For example, it is possible to use linear potentiometric sensors.

In any case, whatever sensor is used, it is designed to generate an extension signal, representing the position of the second segment 22a, 22b relative to the first segment 21a, 21b, the signal being transmitted to the processing unit which, according to the signals received, controls the distributor so that it actuates the hydraulic cylinders in such a way as to produce the signals described above.

The control unit is configured to receive the signals coming from the first and second detection means and to control the first and second movement means in such a way as to carry out the above described steps according to this invention.

Preferably, the invention also comprises a pressure sensor, for example a cell with extensometers or a pressure switch, for each arm 2a, 2b. The pressure sensor is designed for detecting the presence of a load acting on the relative arm 2a, 2b and for transmitting a corresponding signal to the control unit. The presence of a load indicates the contact between the foot 20 of the arm 2a, 2b and the ground or other contact element. The signal of the pressure sensor is used by the control unit for generating an alarm signal, configured to draw the attention of the operator to the load condition of the relative arm 2. This alarm signal allows the operator to be warned of potential dangerous conditions. For example, in the presence of the signal coming from a pressure sensor, the control unit prevents the retraction of the relative second segment 2a, 2b, to prevent a sliding on the ground.

It should be noted that the processing unit comprises a memory module in which are recorded control parameters as a function of the positions of the first and second segments 21a, 21b, 22a, 22b.

Moreover, the processing unit may include a user interface configured to allow an operator to select or set up the control parameters.

The preferred operation of the invention is performed substantially in the following modes.

Once the planned operations have been concluded, during which the machine 1 has been stabilised, the operator in the cabin starts the steps for retraction of the stabilisers 10, using a special command.

As mentioned, the arms 2 move in a synchronised fashion and, more specifically, all four simultaneously.

Initially, the arms 2 raise by means of the rotation of the first segments 21a, 21b upwards, so that the wheels 11 firstly touch the ground (Figure 3), and then continue until reaching said predetermined intermediate position Am (Figure 4). As already specified, the rotation of the first segments 21a, 21b from the operating position to an intermediate position Am may occur in two different ways. In the first way, the rotation is a direct rotation in one direction only. In other words, each arm rotates directly from the operating position to the intermediate position. In the second way, the rotation of the first segments 21a, 21b from the operating position to an intermediate position Am comprises a first rotation, which moves the first segments 21a, 21b beyond the intermediate position Am, that is to say, it moves the first segments to a reference position between the rest position and the intermediate position Am. Subsequently, a step is performed in which the first segments 21a, 21b rotate in the opposite direction from the reference position to the intermediate position (Am). As already mentioned, this makes it possible to guarantee that the arms 2 of a stabiliser are positioned in intermediate positions Am symmetrical to each other with respect to a plane perpendicular to the reference plane P, even if the vehicle is on an inclined plane.

Subsequently, the operating steps already described are implemented (Figures 5 - 8).

The invention is also configured as a method for controlling scissor-like stabilisers 10 of self-propelled operating machines 1 which can be actuated by means of the system described above.

According to the proposed method, starting from the active configuration of the stabilisers 10 (Figures 1 and 2), in which wheels of the machine 1 are raised from the ground surface and the arms 2 are oblique relative to the ground, with the second segments in the extended position and the feet 20 resting on the ground surface, the stabilisers 10 are brought to the inactive configuration (Figure 8) by means of the following steps:
- rotating the first segments 21a, 21b from the operating position to an intermediate position; the intermediate position is substantially a position in which the feet 20 are detached from the ground;
- sliding the second segment 22a of a first arm 2a to the closed position;
- rotating the first segment 21b of a second arm 2b from said intermediate position to the raised position;
- sliding the second segment 22b of the second arm 2b to the closed position;
- rotating the first segment 21a of the first arm 2a from the intermediate position to the final position.

According to a first possible embodiment of the method, the sliding of the second segment 22a of a first arm 2a up to the closed position and the rotation of the first segment 21b of a second arm 2b from said intermediate position to the raised position occur simultaneously.

According to a second possible embodiment of the method, the sliding of the second segment 22b of the second arm 2b to the closed position and the rotation of the first segment 21a of the first arm 2a from the intermediate position to the final position occur simultaneously.

According to a third possible embodiment of the method, the rotation of the first segment 21b of a second arm 2b from said intermediate position to the raised position and the sliding of the second segment 22b of the second arm 2b to the closed position occur simultaneously. Preferably, but not necessarily, according to this third possible embodiment of the method, at least a part of the movement of the second segments 22a, 22b from the extended position to the closed position occurs simultaneously. Preferably, the second segment 22b of the second arm 2b stops at an intermediate point of its stroke, until the moment the second segment 22a of the first arm 2a reaches its closed position. This makes it possible to make more precise the actuation of the motor means designed for the movements of the various segments 21a, 21b, 22a, 22b.

Each of the three embodiments described above, by simultaneously performing at least two steps of the method, allows the time for execution of the sequence to be reduced, and therefore the time necessary for each stabiliser 10 to pass from the active configuration to the inactive configuration is reduced.

As already mentioned, in the inactive configuration of the stabilisers 10 the arms 2 have a minimum length, so that the stabilisers 10 define the minimum lateral dimensions of the machine.

In the active configuration of the stabilisers 10, the arms 2 have a maximum length and the wheels 11 are detached from the ground, in such a way that the load of the vehicle is supported by the arms 2.

Moreover, the invention is configured also as a computer program which, running on an electronic processing unit, implements the steps of the proposed method.

## Claims

1. A method for controlling a scissor stabiliser (10) of self-propelled operating machines (1), such as telescopic handlers or the like, of the type comprising at least a pair of rotatable telescopic stabilising arms (2a, 2b), wherein each arm (2a, 2b) comprises:
a first segment (21a, 21b) rotatable between a raised position and an operating position;
a second segment (22a, 22b), slidable relative to the first segment (21a, 21b) between an extended position and a closed position and provided with a foot (20) for contact with the ground;
wherein the stabiliser (10) can be activated between an active configuration, in which the first segments (21a, 21b) are in the operating position and the second segments are in the extended position with the respective feet (20) resting on the ground, in such a way that wheels (11) of said machine (1) are raised from the ground, and an inactive configuration, in which the first segments (21a, 21b) are in the raised position and the second segments (22a, 22b) are in the closed position, in such a way that the wheels (11) rest on the ground;
**characterised in that** it comprises the following steps for moving the stabilisers (10) from the active configuration to the inactive configuration:
rotating the first segments (21a, 21b) from the operating position to an intermediate position (Am);
sliding the second segment (22a) of a first arm (2a) to the closed position;
rotating the first segment (21b) of a second arm (2b) from said intermediate position to the raised position;
sliding the second segment (22b) of the second arm (2b) to the closed position;
rotating the first segment (21a) of the first arm (2a) from the intermediate position to the final position.

2. The method according to claim 1, wherein said step of rotating the first segments (21a, 21b) from the operating position to an intermediate position (Am) comprises a first rotation, which moves the first segments (21a, 21b) from the operating position to a reference position between the rest position and the intermediate position (Am), and a second rotation, in which the first segments (21a, 21b) rotate in the opposite direction from the reference position to the intermediate position (Am).

3. The method according to claim 1 or 2, wherein the sliding of the second segment (22a) of a first arm (2a) up to the closed position and the rotation of the first segment (21b) of the second arm (2b) from said intermediate position to the raised position occur simultaneously.

4. The method according to any preceding claim, wherein the sliding of the second segment (22b) of the second arm (2b) to the closed position and the rotation of the first segment (21a) of the first arm (2a) from the intermediate position to the final position occur simultaneously.

5. The method according to any preceding claim, wherein the rotation of the first segment (21b) of a second arm (2b) from said intermediate position to the raised position and the sliding of the second segment (22b) of the second arm (2b) to the closed position occur simultaneously.

6. The method according to any preceding claim, wherein the first segments (21a, 21b) perform a total angle of rotation from the operating position to the raised position, said total angle of rotation depending on the constructional characteristics of the stabilising device and the stabilising conditions.

7. The method according to any preceding claim, wherein in said intermediate position (Am) the angle of inclination of the first segments (21a, 21b) is greater than or equal to 50% of the total angle of rotation of the respective arms (2).

8. The method according to any preceding claim, wherein, in the inactive configuration of the stabilisers (10), the arms (2) are inclined upwards.

9. The method according to any preceding claim, wherein in the completely closed position of the second segments (22), the arms (2) have a minimum length.

10. A stabilising system for a self-propelled operating machine (1), such as a telescopic handler or the like, comprising at least two scissor stabilisers (10), designed to adopt an active configuration, in which they stabilise the machine (1) raising the wheels (11) of the machine (1) from the ground, and an inactive configuration, in which said wheels (11) are rested on the ground, wherein:
each stabiliser (10) comprises at least one pair of rotatable telescopic stabilising arms (2a, 2b);
each arm (2a, 2b) comprises a first segment (21a, 21b), rotatable between a raised position and an operating position, and a second segment (22a, 22b), slidable relative to the first segment (21a, 21b) between an extended position and a closed position and provided with a foot (20) for contact with the ground;
first movement means (3) are designed for rotating the first segments (21a, 21b) between said raised position and said operating position;
second movement means are designed for moving the second segments (22a, 22b) between said closed position and said extended position;
**characterised in that** it comprises a processing unit configured to control said first and second movement means to carry out the following steps:
rotating the first segments (21a, 21b) from the operating position to an intermediate position;
sliding the second segment (22a) of a first arm (2a) to the closed position;
rotating the first segment (21b) of a second arm (2b) from said intermediate position to the raised position;
sliding the second segment (22b) of the second arm (2b) to the closed position;
rotating the first segment (21a) of the first arm (2a) from the intermediate position to the final position.

11. The system according to claim 10, wherein said processing unit is configured for controlling said first and second movement means to actuate said step of rotating the first segments (21a, 21b) from the operating position to an intermediate position (Am) comprising the following steps:
- a first rotation, which moves the first segments (21a, 21b) from the operating position to a reference position between the rest position and the intermediate position (Am);
- a second rotation, in which the first segments (21a, 21b) rotate in the opposite direction from the reference position to the intermediate position (Am).

12. The system according to claim 10 or 11, wherein said processing unit is configured for controlling said first and second movement means to simultaneously actuate the sliding of the second segment (22a) of a first arm (2a) to the closed position and the rotation of the first segment (21b) of the second arm (2b) from said intermediate position to the raised position.

13. The system according to any one of claims 10 to 12, wherein the processing unit is configured for controlling said first and second movement means to simultaneously actuate the sliding of the second segment (22b) of the second arm (2b) to the closed position and the rotation of the first segment (21a) of the first arm (2a) from the intermediate position to the final position.

14. The system according to any one of claims 10 to 12, wherein the processing unit is configured for controlling said first and second movement means to simultaneously actuate the rotation of the first segment (21b) of a second arm (2b) from said intermediate position to the raised position and the sliding of the second segment (22b) of the second arm (2b) to the closed position.

15. A self-propelled operating machine (1), such as a telescopic handler or the like, comprising a stabilising system according to any one of claims 1 to 15.
